Europäisches Patentamt

European Patent Office

Office européen des brevets

(19)

(11) Veröffentlichungsnummer: **0 215 458 B1**

(12) **EUROPÄISCHE PATENTSCHRIFT**

(45) Veröffentlichungstag der Patentschrift: **17.04.91**

(21) Anmeldenummer: **86112673.8**

(22) Anmeldetag: **13.09.86**

(51) Int. Cl.5: **H01S 3/038**, H01S 3/041, H01S 3/0975

(54) **Gas-Laser.**

(30) Priorität: **14.09.85 DE 8526361 U**

(43) Veröffentlichungstag der Anmeldung:
**25.03.87 Patentblatt 87/13**

(45) Bekanntmachung des Hinweises auf die
Patenterteilung:
**17.04.91 Patentblatt 91/16**

(84) Benannte Vertragsstaaten:
**CH DE FR GB IT LI**

(56) Entgegenhaltungen:
EP-A- 0 152 084
DE-A- 3 327 257
US-A- 4 375 690

**PATENT ABSTRACTS OF JAPAN, Band 9, Nr.
110 (E-314)[1833], 15. Mai 1985; & JP-A-60
3170**

(73) Patentinhaber: **Trumpf GmbH & Co
Postfach 1320 Johann-Maus-Strasse 2
W-7257 Ditzingen(DE)**

(72) Erfinder: **Klingel, Hans, Dipl.-Ing. (FH)
Teckstrasse 91
W-7147 Möglingen(DE)**
Erfinder: **Weick, Jürgen, Dipl.-Ing.
Eberhardstrasse 17/3
W-7144 Asperg(DE)**
Erfinder: **Ackermann, Frank, Dr. rer. nat.
Hohenzollernstrasse 16
W-7000 Stuttgart 1(DE)**

(74) Vertreter: **Kinkelin, Ulrich, Dipl.-Ing.
Weimarer Strasse 32/34 Auf dem Goldberg
W-7032 Sindelfingen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Gas-Laser gemäß dem Oberbegriff des Hauptanspruchs, wie er aus EP-A-0152 084 bekannt ist. Bei solchen Leistungs-Lasern spielt die Verteilung der Energie im Strahl eine große Rolle . Man ist bestrebt, die Energie zur Mitte des Strahls hin gleichmäßig ansteigen zu lassen, so daß man einen Mode nullter Ordnung erhält. Leider ergibt sich oft eine ungleichmäßige Energieverteilung, z.B. bei einem Strahl höherer Ordnung, der über den Querschnitt z. B. zunächst ansteigende Energie, dann wieder abfallende Energie, dann wieder ansteigende Energie und dann wieder abfallende Energie aufweist, so daß zwei Maximas entstehen. Auch können drei, vier usw. Maximas entstehen. Es steht dann in der Mitte des Strahls weniger Energie zur Verfügung. In JP-A-603170 ist ein HF-angeregter Gas-Laser mit spiralförmig gewundenen oder in Umfangsrichtung des Rohres versetzten Elektrodenpaaren beschrieben. Aufgabe der Erfindung ist es, einen Gas-Laser insbesondere einen Leistungs-Gas-Laser anzugeben, bei dem die Energieverteilung die eingangs genannten Ungleichmäßigkeiten möglichst vermeidet.

Erfindungsgemäß wird diese Aufgabe durch die aus dem kennzeichnenden Teil des Hauptanspruchs ersichtlichen Merkmale gelöst.

Durch die Erfindung erreicht man, daß die Energieverteilung zur Mitte hin einen gleichmäßigen Anstieg hat.

Um die Form der Energieverteilung im Gasstrahl beeinflussen zu können und beispielsweise statt einer Spitzen- eine Keilform zu erhalten, ist nach einem weiteren Merkmal der Erfindung mindestens ein Elektrodenpaar verdrehbar gegenüber dem Gasstrom bzw. Laserstrahl angeordnet. Je nach der gewünschten Energieform kann man dann eine Verdrehung um kleinere oder größere Winkelgrade vornehmen. Eine besonders einfache Art der Drehanordnung ergibt sich, wenn man die Elektrodenpaare fest mit dem Gasrohr verbindet und dieses in mehrere Abschnitte unterteilt, von denen mindestens einer drehbar gelagert ist. Dabei ist es zweckmäßig, die drehbaren Rohrabschnitte mit einer Verstellvorrichtung zu verbinden, so daß die Verstellung von einem Steuergerät oder von einer Programmsteuerung vorgenommen werden kann. Um während des Arbeitsvorganges ein ungewolltes Verdrehen zu verhindern, ist außerdem noch eine Arretiervorrichtung vorgesehen.

Durch die Merkmale des Anspruchs 6 erreicht man, daß - je nach Anzahl der Elektrodenpaare - keine Vorzugsrichtung entsteht, in der das Plasma besonders stark oder besonders wenig stark den Feldlinien der Elektrodenpaare ausgesetzt ist.

Durch die Merkmale des Anspruchs 7 kann man die Elektrodenpaare zugleich kühlen und die Bohrungen können sich geradlinig erstrecken, wodurch sie einfacher herzustellen sind als z. B. spiralige oder sonstwie gewundene Bohrungen.

Durch die Merkmale des Anspruchs 8 kann man an alle Elektrodenpaare die gleiche Spannung bei gleicher Wirkung anlegen.

Die Zeichnung zeigt ein bevorzugtes Ausführungsbeispiel der Erfindung. In ihr zeigen:

Fig. 1      eine schematische Darstellung bei einem Längsschnitt durch den rohrartigen Körper,

Fig. 2      mehrere Querschnitte der einzelnen Elektrodenabschnitte,

Fig. 3      einen Querschnitt durch einen Drehantrieb eines Rohrabschnittes,

Fig. 4      einen ungefalteten, rohrartigen Körper mit vier jeweils um 90° versetzten Elektrodenpaaren,

Fig. 5      einen Querschnitt durch kühlbare Elektroden.

Der $CO_2$-Laser besitzt einen rohrartigen Körper 1 mit kreisförmigem Innen- und Außenquerschnitt, in welchem sich sowohl das Laser-Gas als auch der Laserstrahl befinden. An den beiden Enden sind die Spiegeleinheiten 3 bzw. 4 angebracht. Letzterer ist mit dem Endspiegel ausgestattet, während sich an der Spiegeleinheit 3 ein teildurchlässiger sogenannter Auskoppelspiegel befindet. Über diesen tritt der erzeugte Laserstrahl aus und er gelangt über eine Laserzuführung 5 zu einer Bearbeitungsstelle oder dergleichen. Der rohrartige Körper 1 ist zu einem U geformt, wodurch sich seine Länge etwa auf die Hälfte reduziert. Dies macht allerdings die Anbringung zweier Umlenkspiegel 6 und 7 für den Laserstrahl erforderlich. Das Laser-Gas wird über die Leitungen 8 und 9 zu und über die Leitung 10 in eine Laser-Gaskühlvorrichtung 11 abgeführt. Aus dieser wird es dann von einem Gebläse 12 wiederum angesaugt.

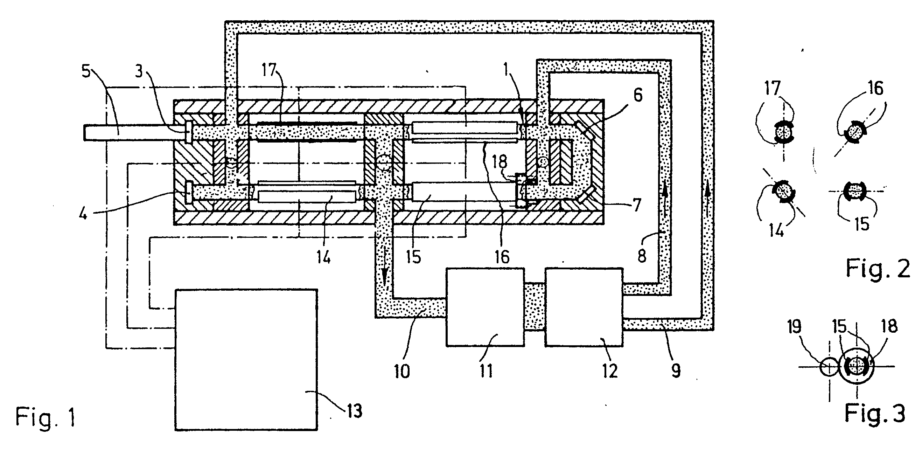

Der Laser wird mit Hochfrequenzenergie betrieben, die von einem Hochfrequenzgenerator 13 stammt. Die notwendige Energie wird dem rohrartigen Körper 1 über mehrere hintereinander liegende Elektrodenpaare 14, 15, 16, 17 zugeführt. Die einzelnen Elektroden der Paare liegen sich dabei gegenüber, wie dies aus Fig. 2 ersichtlich ist. Um nunmehr eine möglichst gleichmäßige Verteilung der Energie im Gasstrom zu erhalten, sind die Elektrodenpaare in Umfangsrichtung des rohrartigen Körpers 1 gegeneinander versetzt angeordnet, wie ebenfalls das Beispiel der Fig. 2 erkennen läßt. Um die Winkellage der Elektrodenpaare zueinander beliebig einstellen zu können, sind - wie aus der Zeichnung nicht ersichtlich ist-die Rohrabschnitte, auf denen sich die Elektrodenpaare befinden, drehbar gegenüber den anderen Rohrteilen gelagert, wobei die Elektrodenpaare fest auf den zugehörigen Rohrabschnitten befestigt sind. Fig. 3 zeigt, daß an einem Rohrabschnitt ein Zahnrad 18 angebracht ist, in welches ein Ritzel 19 eingreift. Dies ist mit einer nicht dargestellten Verstelleinrichtung verbunden, die ihrerseits an eine Programmsteuerung od. dgl. angeschlossen sein kann.

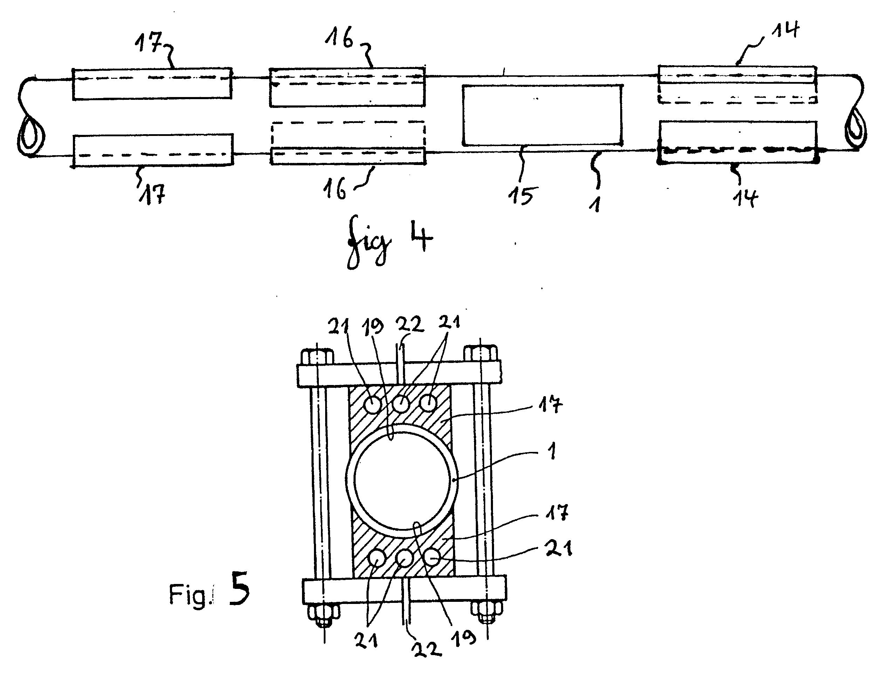

Aus Fig. 4 erkennt man nochmals die Lage der Elektroden beim Laser nach Fig. 1 und 2, diesmal aber im ungefalteten Zustand.

Gemäß Fig. 5 sind um den rohrartigen Körper 1 herum zwei Elektroden 17 angeordnet, die aus Aluminium bestehen, sich axial erstrecken und einen metallischen Block darstellen. Mit ihren konkaven Innenflächen 19 liegen sie direkt am rohrartigen Körper 1 an, der in üblicher Weise ein Glasrohr ist. Somit kann Wärme aus dem Körper 1 in das Elektrodenpaar 17 fließen. Diese Wärme wird dann von einem Medium aufgenommen, das in den Längsbohrungen 21 fließt, die im Korpus des Elektrodenpaares 17 parallel zueinander vorgesehen sind. Ein Zufluß bzw. Abfluß 22 kommuniziert auf nicht dargestellte Weise mit den Bohrungen 21, so daß kaltes Medium zugeführt und warmes Medium abgeführt werden kann. Das Elektrodenpaar 17 wird mit Hilfe eines Klemmjochs 23 gegen den Körper 1 gedrückt und in der räumlich richtigen Lage gehalten.

## Ansprüche

1. $CO_2$-Laser mit einem rohrartigen Körper (1) zur Aufnahme eines entlang dem Laserstrahl strömenden Lasergases, wobei sich längs des rohrartigen Körpers hintereinanderliegend mindestens zwei Elektrodenpaare (14, 15, 16, 17) zur Hochfrequenzanregung mit einander gegenüberliegenden Einzelelektroden befinden, dadurch gekennzeichnet, daß die Elektrodenpaare (14, 15, 16, 17) in Umfangsrichtung des rohrartigen Körpers (1) versetzt zueinander angeordnet sind und daß die Einzelelektroden aus metallischen Blöcken bestehen, die mit ihren konkaven Innenflächen (19) am rohrartigen Körper (1) anliegen und durch Klemmjoche (23) an den rohrartigen Körper (1) gedrückt werden.

2. $CO_2$-Laser nach Anspruch 1, dadurch gekennzeichnet, daß mindestens ein Elektrodenpaar (14 bis 17) verdrehbar gegenüber dem Gasstrom bzw. Laserstrahl angeordnet ist.

3. $CO_2$-Laser nach Anspruch 2, dadurch gekennzeichnet, daß die Elektrodenpaare (14 bis 17) fest mit dem rohrartigen Körper (1) verbunden sind und dieser in mehrere Abschnitte unterteilt ist, von denen mindestens einer drehbar

gelagert ist.

4. $CO_2$-Laser nach Ansprüche 3, dadurch gekennzeichnet, daß die drehbar gelagerten Rohrabschnitte mit einer Verstelleinrichtung (18, 19) verbunden sind.

5. $CO_2$-Laser nach Ansprüch 3 oder 4, dadurch gekennzeichnet, daß für die drehbaren Rohrabschnitte eine Arretiervorrichtung vorgesehen ist.

6. $CO_2$-Laser nach Anspruch 1, dadurch gekennzeichnet, daß die Elektrodenpaare winkelmäßig gleichmäßig verteilt Umfang des Körpers angeordnet sind und länglich sind.

7. $CO_2$-Laser nach Anspruch 1, dadurch gekennzeichnet, daß die Metallblöcke Bohrungen für ein Kühlmedium haben.

8. $CO_2$-Laser nach Anspruch 1, dadurch gekennzeichnet, daß die Elektrodenpaare gleich lang sind.

## Claims

1. $CO_2$ Laser having a tubular body (1) for accommodating a laser gas flowing along the laser beam, at least two electrode pairs (14, 15, 16, 17) for radio-frequency excitation with mutually oppositely located single electrodes being located behind one another along the tubular body, characterized in that the electrode pairs (14, 15, 16, 17) are arranged offset with respect to one another in the circumferential direction of the tubular body (1), and in that the single electrodes consist of metallic blocks which with their concave inside surfaces (19) rest against the tubular body (1) and are pressed against the tubular body (1) by clamping yokes (23).

2. $CO_2$ Laser according to Claim 1, characterized in that at least one electrode pair (14 to 17) is arranged rotatably with respect to the gas flow or laser beam.

3. $CO_2$ Laser according to Claim 2, characterized in that the electrode pairs (14 to 17) are firmly connected to the tubular body (1) and the latter is subdivided into several sections, of which at least one is rotatably supported.

4. $CO_2$ Laser according to Claim 3, characterized in that the rotatably supported tube sections are connected to an adjusting device (18, 19).

5. CO₂ Laser according to Claim 3 or 4, characterized in that a locking device is provided for the rotatable tube sections.

6. CO₂ Laser according to Claim 1, characterized in that the electrode pairs are arranged angularly uniformly distributed on the circumference of the body and are elongated.

7. CO₂ Laser according to Claim 1, characterized in that the metal blocks have holes for a cooling medium.

8. CO₂ Laser according to Claim 1, characterized in that the electrode pairs are equally long.

**Revendications**

1. Laser à CO₂ comportant un corps tubulaire (1) destiné à recevoir un gaz à laser s'écoulant le long du faisceau laser, au moins deux paires d'électrodes (14, 15, 16, 17) pour excitation à haute fréquence, étant disposées l'une derrière l'autre le long du corps tubulaire avec leurs électrodes individuelles opposées l'une à l'autre, caractérisé en ce que les paires d'électrodes (14, 15, 16, 17) sont décalées l'une par rapport à l'autre dans la direction périphérique du corps tubulaire (1) et en ce que les électrodes individuelles sont réalisées dans des blocs métalliques qui par leurs faces intérieures (19) concaves s'appliquent contre le corps tubulaire (1) et sont pressées contre le corps tubulaire (1), par des barrettes de serrage (23).

2. Laser à CO₂ selon la revendication 1, caractérisé en ce qu'au moins une paire d'électrodes (14 à 17) est disposée tournante par rapport au courant de gaz ou au faisceau laser.

3. Laser à CO₂ selon la revendication 2, caractérisé en ce que les paires d'électrodes (14 à 17) sont solidaires du corps tubulaire (1) et en ce que celui-ci est subdivisé en plusieurs sections dont une au moins est montée tournante.

4. Laser à CO₂ selon la revendication 3, caractérisé en ce que les sections de tubes montées tournantes sont reliées à un dispositif de réglage (18, 19).

5. Laser à CO₂ selon la revendication 3 ou 4, caractérisé en ce qu'il est prévu un dispositif de blocage pour les sections de tube tournantes.

6. Laser à CO₂ selon la revendication 1, caractérisé en ce que les paires d'électrodes sont uniformément réparties angulairement sur le pourtour du corps et sont allongées.

7. Laser à CO₂ selon la revendication 1, caractérisé en ce que les blocs métalliques possèdent des perçages pour un fluide de refroidissement.

8. Laser à CO₂ selon la revendication 1, caractérisé en ce que les paires d'électrodes ont une même longueur.

Fig. 1

Fig. 2

Fig. 3

Fig 4

Fig. 5